# EUROPÄISCHE PATENTANMELDUNG

(11) **EP 2 246 644 A2**
(43) Veröffentlichungstag der Anmeldung: **03.11.2010**
(21) Anmeldenummer: 10159238.4
(22) Anmeldetag: 07.04.2010
(51) Int. Cl.: F24J 2/48

(54) **Absorber für einen Solarkollektor und zugehöriger Solarkollektor**

(30) Priorität: 08.04.2009 DE 102009016618
(71) Anmelder: Centrotec Composites GmbH, 59929 Brilon (DE)
(72) Erfinder: Sager, Frank, 59929 Brilon (DE); Wülbeck, Norbert, 59929 Brilon (DE)
(74) Vertreter: Zenz

(57) **Zusammenfassung**

Bei einem Solarkollektor zur solarthermischen Energiegewinnung, der einen Absorber (5; 10) aufweist, der thermisch mit einem Fluidleitungssystem (4; 13) gekoppelt ist, um absorbierte Wärme an ein Transportfluid abzugeben, soll eine Lösung geschaffen werden, die einen verbesserten Solarkollektor mit einem erhöhten Wirkungsgrad bereitstellt. Dies wird dadurch erreicht, dass der Absorber (5; 10) wenigstens teilweise aus einem Kunststoff gebildet ist, wobei in dem Kunststoff Nanoröhren eingebracht sind.

## Beschreibung

Die Erfindung betrifft das Gebiet der Sonnenkollektoren. Insbesondere betrifft die Erfindung Sonnenkollektoren zur solarthermischen Wärmeerzeugung.

Solarthermische Sonnenkollektoren werden eingesetzt, um Energie aus einfallendem Sonnenlicht aufzunehmen und an ein durch den solarthermischen Solarkollektor strömendes Fluid (Wärmetransportfluid) abzugeben. Durch diesen Fluid-Durchlauf durch den Kollektor kann das Wärmetransportfluid mit Wärmeenergie angereichert werden. Diese Wärme steht zum Beispiel zur Speicherung oder zum Verbrauch zur Verfügung.

In herkömmlichen Solarkollektoren ist ein Absorber Bestandteil des Kollektoraufbaus. Er ist optimiert für die Absorption der einfallenden Strahlung der Sonne und ist thermisch mit dem Fluidsystem gekoppelt, um die aufgenommene Energie als Wärmeenergie in das Fluid einzuleiten. Üblicherweise bestehen die in Sonnenkollektoren verwendeten Solarabsorber aus Metallstoffen, wie zum Beispiel aus Aluminium, Kupfer oder Kupfer-Aluminiumlegierungen. Ggf. kann der Absorber mit einer selektiven Beschichtung versehen sein, welche die Aufnahme der Energie aus dem Sonnenlicht weiter erhöht. Als Wärmetransportfluid wird regelmäßig Glykol eingesetzt, welches die eingeleitete Wärmeenergie von dem Solarkollektor in einen Wärmetauscher abgibt. Typische Wärmeleitfähigkeit für die heute als Absorber verwendeten Materialien betragen 200 bis 400 W/(m*K).

Es besteht grundsätzlich jederzeit Bedarf dafür, den Wirkungsgrad derartiger Solaranlagen zu optimieren und insbesondere die Verluste bei der Umwandlung und Weiterleitung der Strahlungsenergie in das Wärmetransportfluid zu minimieren.

Der Erfindung liegt daher die Aufgabe zugrunde, verbesserte Solarkollektoren bereitzustellen, welche einen erhöhten Wirkungsgrad aufweisen.

Die Aufgabe wird erfindungsgemäß gelöst durch einen Solarkollektor mit den Merkmalen des Patentanspruchs 1 sowie einen Absorber zur Verwendung in Solarkollektoren gemäß Patentanspruch 7.

Erfindungsgemäß ist der Absorber wenigstens teilweise aus einem Kunststoff gebildet, wobei in dem Kunststoff Nanoröhren eingebracht sind.

Derartige Gemische aus Kunststoffen mit Nanoröhren sind bislang bekannt, um die mechanischen Eigenschaften von Kunststoffen zu verbessern. Außerdem ist es bekannt, auf diese Weise elektrisch leitende Kunststoffe herzustellen. Die erfindungsgemäße Verwendung macht sich zu Nutze, dass die Nanoröhren auch die thermische Leitfähigkeit derartiger Materialien deutlich erhöhen. Je nach Mischungsverhältnis beträgt die Wärmeleitfähigkeit bis zu 4000 W/(m*K). Eine derart gesteigerte Wärmeleitfähigkeit ermöglicht die verlustarme Überleitung der eingestrahlten Sonnenenergie in das Fluidsystem oder/und eine Reduktion der erforderlichen Absorberfläche bei vergleichbaren Energieausbeuten.

Nanoröhren an sich sind in der Technik und Wissenschaft bekannt. Der Durchmesser derartiger Röhren liegt im Bereich von Nanometern bis zu einigen 10 nm. Man kann Nanoröhren aus verschiedenen Materialien, insbesondere Kohlenstoffnanoröhren von verschiedenen Herstellern am Markt beziehen.

Die außergewöhnlichen elektrischen und mechanischen Eigenschaften von Nanoröhren haben diese für den Bereich äußerster mechanischer Belastungen und elektrischer Effekte interessant gemacht. Die Beimischung von Nanoröhren zu einem Kunststoffmaterial ermöglicht es gemäß der Erfindung nun, einerseits die Vorteile der Formbarkeit und der Herstellverfahren für Kunststoffe zu nutzen und andererseits auch die hervorragenden Eigenschaften hinsichtlich der thermischen Leitfähigkeit, welche die Nanoröhren bereitstellen.

Bisher wurden metallische Werkstoffe verwendet, um Absorber zu bilden. Dies lag einerseits an der guten thermischen Leitfähigkeit und andererseits an der guten Bearbeitbarkeit und Formbarkeit derartiger Materialien. Gemäß der Erfindung können für die Herstellung des Absorbers nun hergebrachte Verarbeitungsverfahren für Kunststoffe, wie zum Beispiel Platten- oder Folienextrusion, Blaßformen, Heißpressen, Thermoumformen, Vakuumumformen, Tiefziehen, Profilextrusion, Pultrusion und Spritzgießen verwendet werden, wobei den Kunststoffen eine oder mehrere Arten von Nanoröhren in Pulverform zugegeben werden. Diese Zugabe kann vor oder während des Verarbeitungsprozesses stattfinden und verleiht dem Kunstoffmaterial die besonderen thermischen Eigenschaften.

Die Zugabe von Nanoröhren zum Kunststoff kann in Abhängigkeit von der gewünschten Wärmeleitfähigkeit einerseits und den mechanischen Eigenschaften des Kunststoffs andererseits festgelegt werden. Durch die Fülle an möglichen Bearbeitungsverfahren und Formgebungsverfahren sind der Formgebung von Absorbern aus diesen Kunststoff-Nanoröhrenmaterialien nahezu keine Grenzen gesetzt. Auch bisher undenkbare Formungen für Solarkollektoren und Absorber sind durch die Ausbildung des Absorbers aus einem Kunststoffmaterial möglich.

Die deutlichen Wirkungsgradverbesserungen aufgrund der erhöhten Wärmeleitfähigkeit gegenüber metallischen Materialien erlauben bei unveränderten Absorberabmessungen eine Steigerung der Effizienz der Wärmegewinnung, insbesondere kann ggf. die Durchströmgeschwindigkeit mit dem Transportfluid erhöht werden. Alternativ können kompaktere Solarkollektoren realisiert werden, da pro Absorberfläche mehr Solarenergie an das Transportfluid weitergeleitet werden kann.

Die erfindungsgemäßen Solarkollektoren können in ihrem übrigen Aufbau herkömmlichen Solarkollektoren gleichen, insbesondere kann über dem Solarkollektor eine Abdeckung, ggf. mit einem evakuierten Zwischenraum zwischen Abdeckung und Absorber angeordnet sein. Unterhalb des Absorbers und unterhalb des fluidführenden Systems können thermische Isolationsmittel vorgesehen sein, um den Unterbau des Solarkollektormoduls vor übermäßiger Wärmeeinwirkung zu schützen und unerwünschte Wärmeableitung zu verhindern.

In Ausgestaltung der Erfindung ist vorgesehen, dass für den Absorber ein thermoplastischer Kunststoff verwendet wird. Dadurch ist es möglich, dass insbesondere während des Herstellprozesses die Formgebung des Absorbers in einem bestimmten Temperaturbereich erfolgt, in welchem der thermoplastische Kunststoff reversibel verformbar ist. Ein weiterer Vorteil des thermoplastischen Kunststoffs ist dessen Schweißbarkeit, so dass an den Absorber Bauteile mit artgleichem Kunststoff angeschweißt werden können.

In einer vorteilhaften Weiterbildung der Erfindung ist der Absorber aus Polyamid (PA), Polyphenylensulfid (PPS) oder Polycarbonat (PC), oder auch einer Kombination dieser höher temperaturbelastbaren Kunststoffe gebildet, wobei es insbesondere vorteilhaft ist, die jeweils wärmestabilisierten Formen bzw. Typen der Kunststoffe zu verwenden. Ein derartiger Absorber ist mechanisch bis zu Temperaturen deutlich über 200° C äußerst stabil. Die sehr gute thermische Beständigkeit dieses Kunststoffs in Kombination mit den durch die Nanoröhren vermittelten Eigenschaften, insbesondere die äußerst gute thermische Leitfähigkeit, bieten ideale Bedingungen für die Verwendung als Absorber in Solarkollektoren, da einwirkende Wärmeenergie rasch an ein Transportfluid abgeleitet wird. Die thermische Belastung des Kunststoffs ist durch die gute Wärmeableitung an das Fluid reduziert. Außerdem ist dieses Material chemisch äußerst beständig und mit bekannten Verfahren bearbeitbar und formbar.

In einer bevorzugten Ausführungsform werden als Nanoröhren Kohlenstoff-Nanoröhren verwendet. Diese Kohlenstoff-Nanoröhren sind im Handel ohne weiteres verfügbar und weisen in ihrer thermischen Leitfähigkeit hervorragende Werte auf. Durch Beimischung der Kohlenstoff-Nanoröhren entsteht daher ein Kunststoff-Nanoröhren-Gemisch mit hervorragenden Wärmeleiteigenschaften. Außerdem sind die Kohlenstoff-Nanoröhren bereits heute im Handel erhältlich und in ausreichender Menge wirtschaftlich zu beziehen.

In einer Weiterbildung der Erfindung weist der Absorber eine wärmeabsorbierende Beschichtung auf, welche zur Optimierung der Absorption der einfallenden Strahlung geeignet ist.

Der aus dem Kunststoff-Nanoröhren-Gemisch hergestellte Absorber kann mit einer Beschichtung versehen sein, welche die Strahlungsenergie aus der einfallenden Strahlung mit noch höherem Wirkungsgrad aufnimmt als dies die Oberfläche des Absorbermaterials tut. Eine derartige Beschichtung wird in geringer Dicke auf den Absorber aufgebracht, verbessert jedoch dessen Absorptionseigenschaften erheblich. Als Beschichtungen können zum Beispiel von herkömmlichen Absorbern bewährte Absorbermaterialien mit selektiven Eigenschaften verwendet werden, welche insbesondere die langwellige Wärmeabstrahlung aufnehmen (z. B. Schwarz-Chrom-Beschichtung oder Titannitrid/Titanoxid-Beschichtung). Derartige Beschichtungen können z. B. aufgedampft werden.

In einer Weiterbildung der Erfindung weist der Solarkollektor einen Absorber aus Kunststoff mit beigemischten Nanoröhren auf, wobei der Absorber selbst mehrere kommunizierende Hohlräume aufweist, durch welche das Transportfluid strömen kann. In dem Absorber sind zum Beispiel mäanderförmige Kanäle ausgebildet, so dass in dem Absorber selbst ein FluidLeitungssystem ausgebildet ist. Der Absorber ist in diesem Fall nicht mehr zwingend mit einem separaten FluidLeitungssystem z. B. aus metallischen Leitungsstücken thermisch gekoppelt, sondern das Transportfluid durchströmt den Absorber unmittelbar. Dies kann z. B. realisiert werden, in dem zwei spiegelbildliche Platten mit entsprechenden Vertiefungen in einem Tiefziehverfahren hergestellt werden, wobei diese Platten jeweils als erfindungsgemäße Absorber aus dem Kunststoffmaterial mit Nanoröhren gebildet sind. Diese Platten können dann in einem weiteren Schritt z.B. mittels Schweißen oder Kleben miteinander verbunden werden, so dass die in den Einzelteilen vorhandenen Vertiefungen ein Fluidsystem bilden, durch welches das Fluid strömen kann. Da das Fluid unmittelbar in Kontakt mit dem äußerst wärmeleitfähigen Absorbermaterial tritt, wird das Fluid entlang des gesamten Umfangs des Strömungsquerschnitts äußerst effektiv erwärmt. Da der Absorber auch mit der Unterseite der Fluidkanäle in thermisch gut leitender Verbindung steht, ist eine Wärmeübertragung an Fluidbereiche möglich, die bislang, bei herkömmlichen Solarkollektormodulen, nicht möglich war. Der Wirkungsgrad derartiger integrierter Absorber mit Fluidsystem ist erheblich höher als bei der Kopplung von Absorbern an separate Fluidsysteme. Außerdem ist die Gestaltung des Fluidsystems aufgrund der einfachen Bearbeitbarkeit von Kunststoff nahezu grenzenlos und wird nicht bspw. durch Biegeradien von Rohrleitungen begrenzt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Die Erfindung wird nun anhand der beiliegenden Zeichnung näher erläutert.
Figur 1 zeigt eine schematische Explosionsdarstellung eines Solarkollektormoduls gemäß einem ersten Ausführungsbeispiel der Erfindung;
Figur 2 zeigt das Solarkollektormodul gemäß dem Ausführungsbeispiel aus Figur 1 in einer teildurchsichtigen schematischen Ansicht.
Figur 3 zeigt eine schematische Perspektivansicht eines erfindungsgemässen Absorbers gemäß einem zweiten Ausführungsbeispiel der Erfindung;
Figur 4 zeigt das komplette Solarkollektormodul gemäß dem Ausführungsbeispiel aus Figur 3 in einer Explosionsdarstellung.

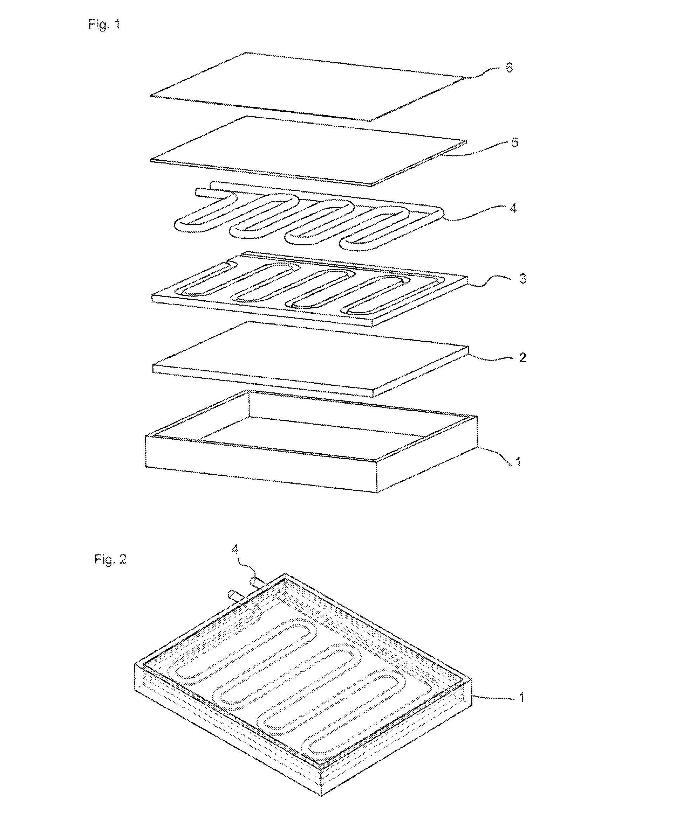

Wie in Figur 1 gezeigt, umfasst ein Solarkollektormodul gemäß einem ersten Ausführungsbeispiel eine stabilisierende und mechanisch belastbare Wanne 1. Diese Wanne 1 bietet Seitenflächen und eine Grundfläche und stabilisiert durch ihre Versteifung den gesamten Kollektoraufbau, wobei in alternativer Ausführungsform die Grundfläche ausgelassen werden kann, so dass die Wanne 1 in Form eines Rahmens ausgebildet ist. Mit der Wanne 1 kann das Solarkollektormodul, auf die Sonne ausgerichtet, auf einer Unterkonstruktion in einem geeigneten Winkel montiert werden.

In der Wanne 1 angeordnet ist eine thermisch isolierende Materialschicht bzw. eine thermische Isolationsschicht 2, die zum Beispiel aus Glaswolle bzw. Steinwolle besteht oder aus einer keramischen Schicht gebildet ist. Diese thermische Isolationsschicht 2 schützt die Wanne 1 sowie den Unterbau unter dem Kollektormodul vor starkem Wärmeeinfluss. Außerdem verhindert die Isolationsschicht 2, dass übermäßige Verlustwärme in den Bereich unterhalb des Kollektors oder in den Rahmenaufbau abgeleitet wird.

Eine Trägerplatte 3 für ein Fluidleitungssystem bzw. für Fluidleitungen 4 ist auf der Isolationsschicht 2 angeordnet. Die Trägerplatte 3 dient zur Wärmeverteilung im Fluidleitungssystem 4 und bietet entsprechende Ausnehmungen, in denen das Fluidleitungssystem 4 mechanisch stabil und gegen eine seitliche Verrutschung gesichert eingelegt ist.

Ein als Absorberfläche bzw. Absorberplatte ausgebildeter Absorber 5 ist in unmittelbaren Kontakt zu dem Fluidleitungssystem 4 auf diesem Fluidleitungssystem 4 aufgebracht und in thermisch leitendem Kontakt mit diesem verbunden. Der plattenförmig ausgebildete Absorber bzw. die Absorberplatte 5 nimmt die Strahlungsenergie von einfallendem Licht auf und leitet diese in das Fluidleitungssystem 4 ein. Dazu ist die Absorberplatte 5 erfindungsgemäß zumindest teilweise aus einem Kunststoffmaterial mit Nanoröhren gebildet. Zumindest in den Bereichen in Nähe des Fluidleitungssystems 4 weist der Absorber 5 ein Kunststoffmaterial mit Nanoröhren auf. Dieses Kunststoffmaterial kann durch bekannte Verarbeitungsschritte an die jeweilige Geometrie des Solarkollektors angepasst und zugeschnitten werden und zur optimalen Wärmeleitung in das Fluidsystem angepasst werden. An der Absorberplatte 5 können an deren Unterseite auf die Fluidleitungen 4 angepasste Wärmeüberleitbereiche, oder Verstärkungen oder Profilierungen angeordnet sein. Durch das Material der Nanoröhren wird dem Kunststoff hohe Wärmeleitfähigkeit verliehen, wodurch sowohl in der planaren Ebene des Absorbers 5 als auch hinab in das Fluidsystem 4 eine hervorragende Wärmeleitung stattfindet und Wärmeverluste minimiert werden. Eine gute Wärmeleitfähigkeit ermöglicht einerseits, die an einer Stelle auftreffende Strahlungsenergie als Wärme auf die gegenüberliegende Absorberplattenseite zum Fluidleitungssystem 4 hindurchzuleiten. Andererseits treten bei dem Fluidleitungssystem 4 aufgrund des Zulaufs von kaltem Trägerfluid und des Austretens heißen Trägerfluids prinzipbedingte Wärmegradienten entlang des Fluidumlaufs durch das Fluidleitungssystem 4 auf. Dies führt auch zu Temperaturgradienten in der Ebene des Absorbers 5. Aufgrund der hervorragenden Wärmeleitfähigkeit des Absorbers 5 ist es möglich, die an einem Flächenpunkt auftreffende Strahlungsenergie in der Ebene zu einer Energiesenke, zum Beispiel einen Bereich mit kaltem Fluid, überzuleiten. Zwar stellt sich auch auf dem Absorbermaterial eine gewisse Temperaturverteilung ein, der Temperaturausgleich in der Ebene ist jedoch aufgrund der hervorragenden Wärmeleiteigenschaften äußerst schnell und effizient.

In einer denkbaren Ausgestaltung kann die Trägerplatte 3 ebenfalls aus einem Kunststoffmaterial mit Nanoröhren gebildet sein, so dass das Fluidleitungssystem 13 vollständig von einem Kunststoffmaterial mit Nanoröhren umgeben ist. Denkbar ist es auch, dass die Trägerplatte 3 als Teil des Absorbers 5 ausgebildet ist, wobei in der dem Absorber 5 zugewandten Fläche der Trägerplatte 3 Hohlräume als Fluidwege ausgebildet sind. Beim Zusammenbau werden dann der Absorber 5 und die Fluidwege aufweisende Trägerplatte 3 miteinander verklebt oder verschweißt, wobei sowohl der Absorber 5 als auch die Trägerplatte 3 jeweils aus einem Kunststoffmaterial mit Nanoröhren gebildet sind. Dadurch kann auf ein separates Fluidleitungssystem 13 in Form von beispielsweise metallischen Rohrleitungen verzichtet werden.

Oberhalb des Absorbers 5 ist ein Vakuum zwischen dem Absorber 5 und einer aufliegenden transparenten Abdeckplatte 6 ausgebildet. Das Vakuum verringert die Energieverluste durch ein Aufheizen von ggf. vorhandener Luft. Die Abdeckplatte 6 ist insbesondere für eine Transparenz im Bereich der eintretenden Strahlungsenergie ausgebildet.

Figur 2 zeigt das Solarkollektormodul gemäß dem ersten Ausführungsbeispiel in einer zusammengesetzten perspektivischen und teildurchsichtigen Ansicht.

Die erfindungsgemäße Gestaltung des Absorbers und die Verwendung des Absorbermaterials als Kunststoffmaterial mit Nanoröhrchen ermöglicht eine besonders leichte Bauweise von Solarkollektormodulen. Außerdem sind Formgestaltungen möglich, die bei bisherigen Absorbermaterialien kaum realisierbar waren. Schließlich kann die Bauhöhe eines derartigen Solarkollektormoduls gegenüber herkömmlicher Bauweise beträchtlich reduziert werden.

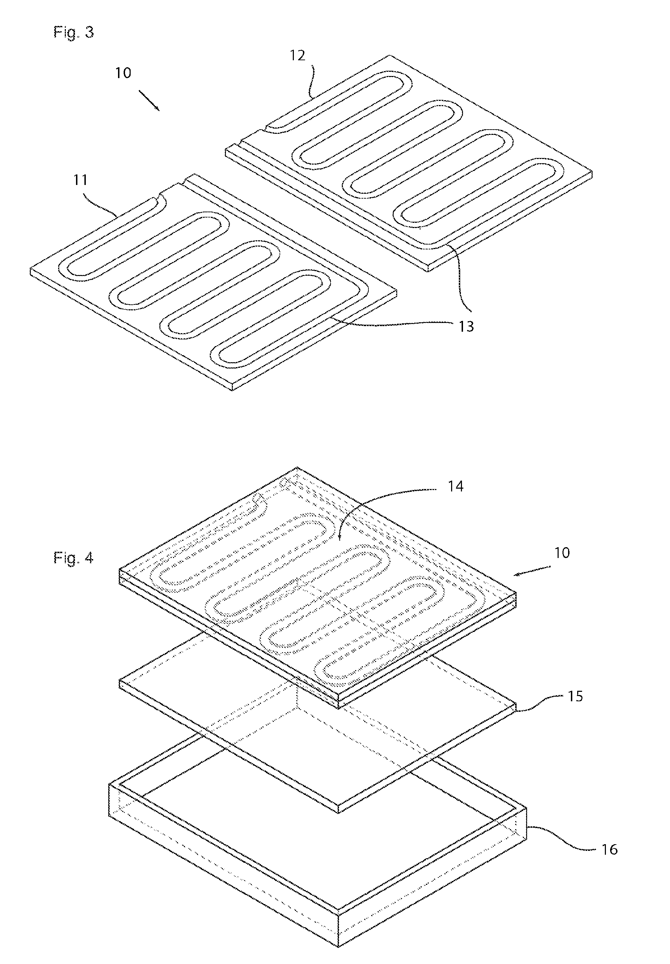

Figur 3 zeigt die Komponenten eines Absorbers 10 gemäß der Erfindung in einer zweiten Ausführungsform.

Bei dieser zweiten Ausführungsform ist aus dem Kunststoffmaterial mit Nanoröhrchen ein Absorber 10 mit zwei Absorberhälften 11, 12 bzw. Absorberteilschalen gebildet. Zumindest teilweise weist der Absorber 19 ein Kunststoffmaterial mit Nanoröhren auf. Von Vorteil ist es, wenn der Absorber 10 das Kunststoffmaterial mit Nanoröhren zumindest in Bereichen in Nähe der Fluidwege aufweist. Auf den jeweiligen Innenseiten der beiden Absorberhälften 11, 12 ist der Absorber 10 profiliert, um jeweils die Hälfte eines Fluidleitungssystems 13 zu bilden. Die Innenseiten der Absorberhälften 11, 12 weisen das Fluidleitungssystem bildende Vertiefungen auf. Werden die Absorberhälften 11, 12 aufeinander geklappt, so bildet sich ein Absorber 5 mit darin integriertem Fluidleitungsweg bzw. Fluidleitungssystem 13. Da der Absorber 10 insgesamt aus Kunststoffmaterial mit Nanoröhrchen gebildet ist und eine hervorragende Wärmeleitfähigkeit aufweist, ist bei diesem Absorber 10 die Wärmeeinleitung in das durchgeleitete Fluid höchst effizient. Das Fluid durchfließt den Absorber 10 direkt, es ist kein Übergang zwischen einem separat gestalteten Absorber und einem separat gestalteten Fluidleitungssystem erforderlich. Der Absorber 10 kann auf seiner dem Strahlungseinfall zugewandten Seite 14 mit einer wärmeabsorbierenden Beschichtung versehen sein, welche die Absorption von Strahlungsenergie weiter erhöht. Gegenüber einem herkömmlichen Fluidleitungssystem aus metallischen Stoffen ist diese Absorber-Leitungskombination noch leichter als herkömmliche Solarkollektormodule.

Alternativ kann der Absorber 10 als profilierte Platte mit Erhebungen und Vertiefungen ausgebildet sein, was hinsichtlich des verwendeten Kunststoffes zu Materialeinsparungen führen kann und damit den Absorber in seiner Herstellung kostengünstiger macht.

Figur 4 zeigt die Komponenten eines Solarkollektormoduls, welches einen derartigen Absorber 10 mit integriertem Fluidleitungssystem 13 verwendet. Die Absorberhälften 11, 12 sind zur Bildung des Absorbers 10 aufeinandergeklappt und in ihren Kontaktbereichen miteinander verklebt oder verschweißt. Unter dem Absorber 10 ist eine thermische Isolation bzw. Isolationsschicht 15 und ein umgebender Rahmen 16 angeordnet. Alternativ kann der Rahmen als ein wannenförmiges Bauteil mit Seitenflächen und einer Grundfläche ausgebildet sein. Es ist unmittelbar erkennbar, dass diese Bauweise eine äußerst flache Gestaltung des Solarkollektormoduls erlaubt, da Absorber 10 und Fluidleitungssystem 13 integriert ausgebildet sind und eine hervorragende Wärmekopplung zwischen diesen realisiert ist.

Abweichend von der hier gezeigten Ausführung, kann oberhalb des Absorbers ebenfalls eine in den Figuren 3 und 4 nicht dargestellte transparente Abdeckung mit zwischenliegendem Vakuum ausgebildet werden. Bei einer derartigen integrierten Gestaltung des Absorbers 10 sind der Ausbildung der Fluidwege bzw. des Fluidleitungssystems 13 in dem Absorber 10 nahezu keine Grenzen gesetzt.

Insbesondere können derartige Fluidwege 13 in entsprechende Kunststoffelemente, die als Absorber 10 fungieren, nachträglich eingefräst oder thermisch ausgeformt werden, und zwar in beliebig komplexer Form. Beispielsweise können die Fluidwege 13 auch nur in einer (dickeren) Absorberhälfte 11 oder 12 aus Kunststoffmaterial mit Nanoröhrchen eingefräst oder ausgeformt werden, während eine zweite Platte aus demselben Material aufgeschweißt wird, um eine fluiddichte Verbindung bereitzustellen. Derartige Solarkollektoren sind äußerst stabil, flexibel und kostengünstig in der Herstellung.

Als Materialien des Kunststoffs für den Absorber 5 und 10 und ggf. die Trägplatte 3 kommen ein thermoplastischer Kunststoff und insbesondere Polyamid (PA), Polyphenylensulfid (PPS) oder Polycarbonat (PC), oder auch einer Kombination dieser höher temperaturbelastbaren Kunststoffe in Betracht, wobei es insbesondere von Vorteil ist, die jeweils wärmestabilisierten Formen bzw. Typen der Kunststoffe zu verwenden.

## Patentansprüche

1. Solarkollektor zur solarthermischen Energiegewinnung, mit einem Absorber (5; 10), der thermisch mit einem Fluidleitungssystem (4; 13) gekoppelt ist, um absorbierte Wärme an ein Transportfluid abzugeben,
**dadurch gekennzeichnet,**
**dass** der Absorber (5; 10) wenigstens teilweise aus einem Kunststoff gebildet ist, wobei in dem Kunststoff Nanoröhren eingebracht sind.

2. Solarkollektor nach Anspruch 1, **dadurch gekennzeichnet, dass** als Kunststoff ein thermoplastischer Kunststoff verwendet wird.

3. Solarkollektor nach Anspruch 1 oder 2, **dadurch gekennzeichnet, dass** als Kunststoff Polyphenylensulfid, Polyamid oder Polycarbonat, oder eine Kombination dieser Kunststoffe, verwendet wird.

4. Solarkollektor nach einem der vorangehenden Ansprüche, **dadurch gekennzeichnet, dass** die Nanoröhren aus Kohlenstoff gebildet sind.

5. Solarkollektor nach einem der vorangehenden Ansprüche, **dadurch gekennzeichnet, dass** der Absorber (5;10) eine wärmeabsorbierende Beschichtung aufweist.

6. Solarkollektor nach einem der vorangehenden Ansprüche, **dadurch gekennzeichnet, dass** der Absorber (5; 10) mit mehreren in Fluidkommunikation stehenden Hohlräumen ausgebildet ist, durch welche das Transportfluid strömen kann.

7. Absorber zur Verwendung in Sonnenkollektoren für solarthermische Energiegewinnung, wobei der Absorber (5; 10) als Platte ausgebildet ist,
**dadurch gekennzeichnet,**
**dass** der Absorber (5; 10) wenigstens teilweise aus einem Kunststoff gebildet ist, wobei in den Kunststoff Nanoröhren eingebracht sind.

8. Absorber nach Anspruch 7, **dadurch gekennzeichnet, dass** der Absorber (5; 10) als ebene Platte ausgebildet ist.

9. Absorber nach Anspruch 7, **dadurch gekennzeichnet, dass** der Absorber (5; 10) als profilierte Platte mit Erhebungen und Vertiefungen ausgebildet ist.

10. Absorber nach einem der Ansprüche 7 bis 9, **dadurch gekennzeichnet, dass** der Absorber (5; 10) eine wärmeabsorbierende Beschichtung aufweist.
